# FASCICULE DE BREVET EUROPEEN

(11) **EP 4 308 793 B1**
(45) Date de publication et mention de la délivrance du brevet: **29.04.2026**
(21) Numéro de dépôt: 22712957.4
(22) Date de dépôt: 03.03.2022
(51) Int. Cl.: F01D 7/02, B64C 11/38, F01D 25/16, F01D 25/18, F02C 7/06, F04D 29/36, F16H 57/04

(54) **MODULE DE SOUFFLANTE ÉQUIPÉ D'UN DISPOSITIF DE TRANSFERT D'HUILE**
FANMODUL AUSGESTATTET MIT EINER ÖLTRANSFERVORRICHTUNG
FAN MODULE EQUIPPED WITH AN OIL TRANSFER DEVICE

(30) Priorité: 16.03.2021 FR 2102620
(43) Date de publication de la demande: 24.01.2024
(73) Titulaire: SAFRAN AIRCRAFT ENGINES, 75015 Paris (FR)
(72) Inventeur: BECOULET, Julien Fabien Patrick, 77550 MOISSY-CRAMAYEL (FR); BELMONTE, Olivier, 77550 MOISSY-CRAMAYEL (FR); MILLIER, Vincent François Georges, 77550 MOISSY-CRAMAYEL (FR); RODA, Jean Charles Olivier, 77550 MOISSY-CRAMAYEL (FR)
(74) Mandataire: Gevers & Orès
(86) Numéro de dépôt international: PCT/FR2022/050378
(87) Numéro de publication internationale: WO 2022/195191

(56) Documents cités:
- EP-A1- 3 070 377
- EP-A1- 3 138 771
- EP-A1- 3 179 044
- WO-A1-2015/102779
- WO-A1-2020/074816
- GB-A- 824 332
- US-A1- 2004 037 483
- US-B1- 8 484 942

## Description

### Domaine technique de l'invention

La présente invention concerne un module de soufflante pour une turbomachine d'aéronef, ce module comportant un dispositif de transfert d'huile, et un procédé d'assemblage d'un tel module.

### Arrière-plan technique

L'arrière-plan technique comprend notamment les documents US-A1-2004/0037483, WO-A1-2020/074816, EP-A1-3 138 771, EP-A1-3 179 044, EP-A1-3 070 377 US-B1-8,484,942, et WO-A1-2015/102779.

Une turbomachine d'aéronef comprend classiquement un générateur de gaz comportant, de l'amont vers l'aval selon le sens d'écoulement des gaz en fonctionnement, au moins un compresseur, une chambre annulaire de combustion et au moins une turbine.

Les gaz qui pénètrent dans le générateur de gaz sont comprimés dans le ou les compresseurs puis mélangés à du carburant et brûlés dans la chambre de combustion. Les gaz de combustion s'écoulent et se détendent dans la ou les turbine pour entraîner son rotor ou leurs rotors.

Dans le cas d'une turbomachine à double corps, respectivement basse pression et haute pression, le rotor de la turbine haute pression est relié par un arbre haute pression au rotor du compresseur haute pression, et le rotor de la turbine basse pression est relié par un arbre basse pression au rotor du compresseur basse pression.

La turbomachine peut être équipée d'une ou plusieurs hélices, carénées ou non carénées. Dans le cas d'une hélice carénée située à l'amont du générateur de gaz, cette hélice est appelée soufflante et est entraînée par l'arbre basse pression du générateur de gaz.

La soufflante génère un flux de gaz en fonctionnement qui se divise en un premier flux, appelé flux primaire qui s'écoule dans le générateur de gaz comme évoqué dans ce qui précède, et en un second flux, appelé flux secondaire, qui s'écoule autour du générateur de gaz.

Le taux de dilution, qui est le rapport entre le débit du flux secondaire et le débit du flux primaire, est de plus en plus important dans les turbomachines modernes, ce qui se traduit par une augmentation du diamètre de la soufflante et une diminution du diamètre du générateur de gaz.

Pour limiter la vitesse de rotation de la soufflante, en particulier des turbomachines à fort taux de dilution, il est connu d'entraîner cette soufflante par l'intermédiaire d'un réducteur en général du type à train épicycloïdal ou planétaire. L'arbre basse pression entraîne ainsi la soufflante par l'intermédiaire du réducteur.

Une soufflante, ou une hélice en général, peut comprendre des pales à calage variable, c'est-à-dire que chacune des pales a une orientation autour d'un axe radial qui peut être réglée avec précision. Les pales sont portées par un moyeu en forme d'anneau polygonal et sont déplacées en rotation autour de ces axes par l'intermédiaire d'un actionneur hydraulique commun qui est monté à l'intérieur du moyeu. Cet actionneur est alimenté en huile et peut se situer dans un repère tournant lorsqu'il est solidaire en rotation du moyeu et de la soufflante.

La turbomachine comprend un système de lubrification comportant un réservoir d'huile et une pompe, qui est en général situé dans un repère fixe. On comprend donc que l'alimentation en huile de l'actionneur depuis le système de lubrification doit se faire par un dispositif de transfert d'huile depuis un repère fixe jusqu'à un repère tournant. Un dispositif de ce type est couramment appelé OTB, acronyme de l'expression anglo-saxonne *Oil Transfer Bearing.*

Ce type de dispositif peut être monté dans une turbomachine à soufflante du type précité pour alimenter l'actionneur en huile mais aussi pour alimenter le réducteur en huile de lubrification. Ce type de dispositif peut aussi être monté dans un autre type de turbomachine, telle que par exemple une turbomachine équipée d'une hélice non carénée à pales à calage variable, du type turbopropulseur.

Dans la technique actuelle, un dispositif de transfert d'huile comprend un anneau de stator qui comporte une surface cylindrique interne et des canalisations internes d'huile qui débouchent chacune sur cette surface cylindrique interne. Ces canalisations sont reliées par des conduites au système de lubrification précité.

Le dispositif comprend en outre un arbre engagé dans l'anneau et mobile en rotation autour d'un axe à l'intérieur de cet anneau. L'arbre comporte une surface cylindrique externe s'étendant à l'intérieur de la surface cylindrique interne de l'anneau, et des canalisations internes d'huile qui débouchent chacune sur cette surface cylindrique externe. Ces canalisations sont reliées par des conduites à l'actionneur pour son alimentation en huile.

Dans la technique actuelle, la surface cylindrique externe de l'arbre comprend des rainures annulaires de logement de segments annulaires d'étanchéité. Ces segments sont aptes à se déplacer dans les rainures et sont configurés pour prendre appui radialement sur la surface interne de l'anneau pour limiter et maitriser les fuites d'huile. Les débouchés des canalisations précitées sont situés entre deux segments adjacents qui assurent donc qu'un maximum d'huile apportée par chaque canalisation de l'anneau alimente une canalisation correspondante de l'arbre. Le nombre de segments est égal au double du nombre de canalisations. Le document GB-A-824,332 décrit un dispositif de transfert d'huile de ce type.

Cependant, cette technologie n'est pas satisfaisante pour plusieurs raisons. Les tolérances de fabrication et de montage des pièces font qu'il est difficile de maitriser précisément ces fuites. Le dispositif comprend de nombreuses pièces, ce qui complexifie le montage. La fabrication et l'assemblage d'un tel dispositif sont donc relativement longs et coûteux. Par ailleurs, plus le nombre de canalisations du dispositif est important et plus le nombre de segments d'étanchéité est important et plus la dimension axiale et donc l'encombrement axial du dispositif sont importants pour pouvoir monter ces différents segments. Un dispositif de transfert d'huile peut être complexe à intégrer dans une turbomachine du fait de son encombrement. Enfin, la durée de vie d'un tel dispositif est en général limitée du fait de désalignements potentiels entre l'arbre et l'anneau en fonctionnement et de l'usure des segments d'étanchéité qui peut être accentuée par ces désalignements ainsi que par la vitesse de rotation de l'arbre. Plus le diamètre du dispositif est important, et plus la vitesse périphérique de l'arbre et l'usure des segments sont importantes.

Une autre particularité des dispositifs de la technique actuelle est qu'ils se présentent en général chacun sous forme d'une cartouche qui est montée d'un bloc dans la turbomachine. Dans la présente demande, on entend par cartouche, l'ensemble formé par l'arbre et l'anneau d'un dispositif, qui sont pré-montés l'un à l'intérieur de l'autre avant de monter cet ensemble dans une turbomachine.

Dans le cas où le dispositif de transfert serait situé en aval du réducteur de la turbomachine, l'accès au dispositif et à la cartouche depuis l'amont ne serait pas possible lors d'une opération de maintenance. La fixation de l'anneau du dispositif à un stator de la turbomachine, ainsi que le démontage de l'anneau vis-à-vis de ce stator, devraient se faire depuis l'aval de la turbomachine et de l'enceinte de lubrification dans laquelle est située le réducteur. Ceci impliquerait de devoir démonter le compresseur basse pression de la turbomachine ainsi que les équipements montés dans cette zone, ce qui serait long et fastidieux.

L'invention propose ainsi un dispositif de transfert d'huile perfectionné qui résout tout ou partie des problèmes de la technique antérieure.

### Résumé de l'invention

L'invention concerne un module de soufflante pour une turbomachine d'aéronef, ce module comportant une soufflante qui comporte un arbre de soufflante et des aubes de soufflante à calage variable, et un dispositif de transfert d'huile qui est configuré pour assurer un transfert d'huile entre un stator et un actionneur qui est solidaire en rotation de l'arbre de soufflante et qui est configuré pour contrôler le calage des aubes de soufflante, ce dispositif comportant :
- un anneau de stator comportant une surface cylindrique interne et des canalisations internes d'huile qui débouchent chacune sur ladite surface cylindrique interne,
- un arbre engagé dans ledit anneau et comportant une surface cylindrique externe s'étendant à l'intérieur de ladite surface cylindrique interne, l'arbre comportant des canalisations internes d'huile qui débouchent chacune sur ladite surface cylindrique externe, l'arbre comportant en outre un organe de fixation configuré pour être fixé à un rotor de la turbomachine, et
- un support annulaire qui s'étend au moins en partie autour de l'anneau et qui comprend au moins un premier organe de fixation à l'anneau et au moins un second organe de fixation configuré pour être fixé à un stator de la turbomachine,
caractérisé en ce qu'il comprend en outre :
- un palier lisse situé entre lesdites surfaces cylindriques interne et externe, et
- des paliers à rouleaux montés entre l'anneau et l'arbre, de part et d'autre du palier lisse, chacun de ces paliers comportant des bagues externes et des rouleaux portés par l'anneau, l'anneau étant configuré pour être monté sur l'arbre par engagement de l'arbre dans l'anneau lorsque celui-ci est pré-équipé des bagues externes et des rouleaux des paliers,
et en ce que ledit support est configuré pour se déformer élastiquement de façon à autoriser des déplacements de l'anneau en direction radiale.

L'invention propose ainsi un dispositif de transfert d'huile dépourvu d'organes ou de segments d'étanchéité entre les surfaces cylindriques en regard de l'anneau de stator et de l'arbre. A la place, un palier lisse est prévu entre ces surfaces. Des paliers à roulement sont montés de part et d'autre de ce palier lisse de façon à garantir l'épaisseur radiale du palier lisse, quels que soient le régime de la turbomachine et la vitesse périphérique de l'arbre du dispositif de transfert. Les paliers à roulement sont automatiquement lubrifiés par l'huile qui fuit du palier lisse en fonctionnement. Les paliers à roulement assurent en outre la limitation des fuites d'huile à l'extérieur du palier lisse et du dispositif. Les paliers à roulement permettent en outre de supprimer les risques de désalignements entre l'anneau et l'arbre et donc les risques de contact entre eux et d'usure. Les segments d'étanchéité ne constituent donc plus des pièces d'usure du dispositif qui a donc une durée de vie optimisée par rapport à la technique antérieure.

Selon l'invention, le dispositif ne se présente pas sous la forme d'une cartouche lors de son montage. Au contraire, l'anneau du dispositif peut être fixé dans un premier temps au stator de la turbomachine, par l'intermédiaire du support. Indépendamment de ceci, l'arbre du dispositif peut être fixé à un rotor de la turbomachine, et par exemple au porte-satellites tournant d'un réducteur à train épicycloïdal. L'arbre est alors fixé rigidement au porte-satellites et est solidaire en rotation de celui-ci. L'anneau est quant à lui relié au stator par le support qui a une certaine souplesse en direction radiale. Cette souplesse est utile et importante à double titre. Tout d'abord, lors du montage et l'insertion de l'arbre dans l'anneau, l'anneau est apte à se déplacer radialement et à s'auto-centrer sur l'arbre. En fonctionnement, le support autorise en outre des déplacements relatifs en direction radiale entre le dispositif et le stator de la turbomachine. Ceci permet de limiter les contraintes dans le dispositif et les risques de désalignements entre l'arbre et l'anneau du dispositif, garantissant ainsi un palier lisse d'épaisseur radiale constante à l'intérieur du dispositif.

Le module selon l'invention peut comprendre une ou plusieurs des caractéristiques suivantes, prises isolément les unes des autres, ou en combinaison les unes avec les autres :
- le support comprend au moins une première paroi tronconique ajourée ;
- la première paroi tronconique a sa périphérie interne qui est reliée ou qui porte ledit premier organe, cette première paroi s'étendant par exemple radialement vers l'intérieur de l'amont vers l'aval ;
- le support comprend une seconde paroi tronconique dont la périphérie interne est reliée à la périphérie externe de la première paroi et dont la périphérie externe est reliée ou porte ledit second organe, cette seconde paroi s'étendant par exemple radialement vers l'extérieur de l'amont vers l'aval ;
- la première paroi a sa périphérie externe qui est reliée à la périphérie externe d'une troisième paroi tronconique dont la périphérie interne est reliée ou porte une bague externe d'un autre palier à rouleaux, cette troisième paroi s'étendent par exemple de radialement vers l'extérieur de l'amont vers l'aval.
- le dispositif comprend des ouvertures de passage ou de raccordement de conduites d'alimentation en huile des canalisations de l'anneau ;
- une frette est montée à l'intérieur de l'anneau et définit ledit palier lisse avec ladite surface externe de l'arbre ;
- l'arbre comprend des chemins internes intégrés de roulement desdits rouleaux ;
- les chemins internes sont formés par une même surface cylindrique qui s'étend en continu à l'intérieur de la frette ;
   -- les bagues des paliers ont des diamètres internes identiques ;
   -- la frette a deux surfaces cylindriques s'étendant l'une autour de l'autre, dont une surface cylindrique de frettage sur l'anneau et une surface cylindrique de centrage sur l'arbre,
   -- la frette comprend des orifices qui sont situés en regard des débouchés des canalisations de l'anneau, et qui recouvrent par exemple des gorges annulaires formées au niveau de ces débouchés et/ou des débouchés des canalisations de l'arbre,
- la soufflante est entrainée en rotation par un réducteur, ledit dispositif étant monté en amont du réducteur et étant configuré pour alimenter en huile le réducteur ainsi que l'actionneur par des conduites traversant axialement le réducteur, et en particulier un porte-satellites du réducteur ;
- l'arbre du dispositif est fixé au porte-satellites du réducteur ;
- un palier à roulement, et en particulier à rouleaux, est monté entre le porte-satellites et ledit support ;
   - le réducteur est du type épicycloïdal, c'est-à-dire à porte-satellites mobile en rotation et donc à couronne immobile en rotation,
   - le dispositif alimente le réducteur en huile de lubrification, et en particulier au moins une partie de ses paliers et dentures,
   - le dispositif est configuré pour alimenter l'actionneur à une pression d'huile comprise entre 2 et 200 bars, et de préférence entre 5 et 130 bars,
   - le dispositif est configuré pour alimenter le réducteur à une pression d'huile comprise entre 2 et 50 bars, et de préférence entre 5 et 20 bars.

La présente invention concerne également un procédé d'assemblage d'un module de soufflante tel que décrit ci-dessus, comprenant les étapes de :
- fixation de l'arbre au porte-satellites du réducteur, et fixation de l'anneau au stator par l'intermédiaire dudit support, puis
- engagement de l'arbre dans l'anneau.

Le procédé selon l'invention peut comprendre une ou plusieurs des étapes suivantes, prises isolément les unes des autres, ou en combinaison les unes avec les autres :
-- l'arbre du dispositif est engagé dans un espace annulaire formé entre l'anneau, d'une part, et un arbre d'entraînement du solaire du réducteur, d'autre part,
-- l'arbre du dispositif comprend une surface cylindrique unique et continue de formation des paliers lisse et à rouleaux avec l'anneau,
-- lors dudit engagement, des rouleaux portés par le porte-satellites du réducteur sont engagés dans une bague externe portés par ledit support, afin de former un palier à roulement de guidage du porte-satellites. L'invention concerne également une turbomachine d'aéronef, comportant un module tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une demi vue schématique en coupe axiale d'une turbomachine équipée d'un dispositif de transfert d'huile,
[Fig.2] la figure 2 est une vue à plus grande échelle d'une partie de la figure 1,
[Fig.3] la figure 3 est une demi vue schématique en coupe axiale d'une turbomachine équipée d'un dispositif de transfert d'huile, et illustre une étape de montage de ce dispositif,
[Fig.4] la figure 4 est une demi vue schématique en coupe axiale de la turbomachine de la figure 3 après montage du dispositif,
[Fig.5] la figure 5 est une demi vue schématique en coupe axiale d'un dispositif de transfert d'huile selon l'invention.
[Fig.6] la figure 6 est une demi vue schématique en coupe axiale d'une turbomachine équipée du dispositif de la figure 5, et illustre une étape de montage de ce dispositif,
[Fig.7] la figure 7 est une vue à plus grande échelle d'un premier détail de la figure 6,
[Fig.8] la figure 8 est une vue à plus grande échelle d'un second détail de la figure 6,
[Fig.9] la figure 9 est une vue schématique partielle en perspective du dispositif de la figure 5,
[Fig.10] la figure 10 est une autre vue schématique partielle en perspective du dispositif de la figure 5,
[Fig.11] la figure 11 est une autre vue schématique partielle en perspective du dispositif de la figure 5.

### Description détaillée de l'invention

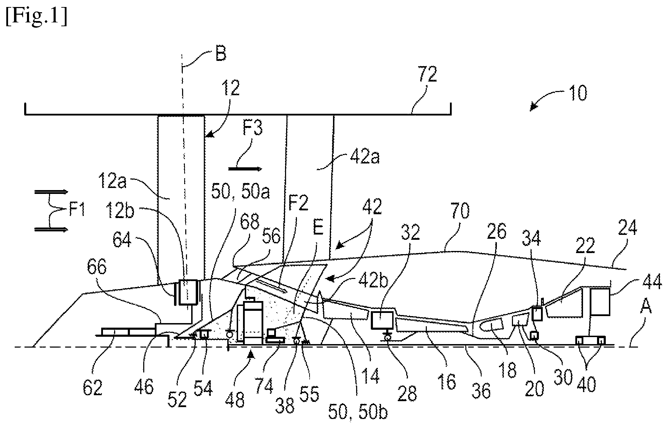

La figure 1 montre une turbomachine 10 qui comporte, de manière classique, une soufflante 12, un compresseur basse pression (BP) 14, un compresseur haute pression (HP) 16, une chambre annulaire de combustion 18, une turbine haute pression (HP) 20, une turbine basse pression (BP) 22 et une tuyère d'échappement 24.

Les rotors du compresseur haute pression 16 et de la turbine haute pression 20 sont reliés entre eux par un arbre haute pression 26 et forment avec lui un corps haute pression (HP) qui est guidé en rotation autour de l'axe A longitudinal de la turbomachine par des paliers à roulements 28, 30. Un premier palier 28 est monté entre une extrémité amont de l'arbre 26 et du corps HP et un carter inter compresseur 32 situé entre les compresseurs BP 14 et HP 16. Un second palier 30 est monté entre une extrémité aval de l'arbre 26 et du corps HP et un carter inter turbine 34 situé entre les turbines BP 22 et HP 24.

Les rotors du compresseur BP 14 et de la turbine BP 22 sont reliés entre eux par un arbre basse pression 36 et forment avec lui un corps basse pression (BP) qui est guidé en rotation autour de l'axe A longitudinal de la turbomachine par des paliers à roulements 38, 40. Au moins un palier 38 est monté entre une extrémité amont de l'arbre 36 et du corps BP et un carter d'entrée 42 situé en amont du compresseur BP 14. D'autres paliers 40 sont montés entre une extrémité aval de l'arbre 36 et du corps BP et un carter d'échappement 44 situé en aval de la turbine BP 22.

La soufflante 12 est entraînée par un arbre de soufflante 46 qui est entrainé par l'arbre BP 36 au moyen d'un réducteur 48. Ce réducteur 48 est généralement de type planétaire ou épicycloïdal.

La description qui suit concerne un réducteur du type épicycloïdal, dont le porte-satellites et le solaire sont mobiles en rotation, la couronne du réducteur étant fixe dans le repère du moteur.

Le réducteur 48 est positionné dans la partie amont de la turbomachine. Une structure fixe comportant schématiquement, ici, une partie amont 50a et une partie aval 50b qui compose le carter moteur ou stator 50 est agencée de manière à former une enceinte E entourant le réducteur 48. Cette enceinte E est ici fermée en amont par une étanchéité 52 au niveau d'un palier 54 permettant la traversée de l'arbre de soufflante 46, et en aval par une étanchéité 55 au niveau du palier 38 permettant la traversée de l'arbre BP 36.

L'enceinte E est disposée à l'intérieur du carter d'entrée 42 qui est situé entre un aubage redresseur d'entrée 56 et le compresseur BP 14.

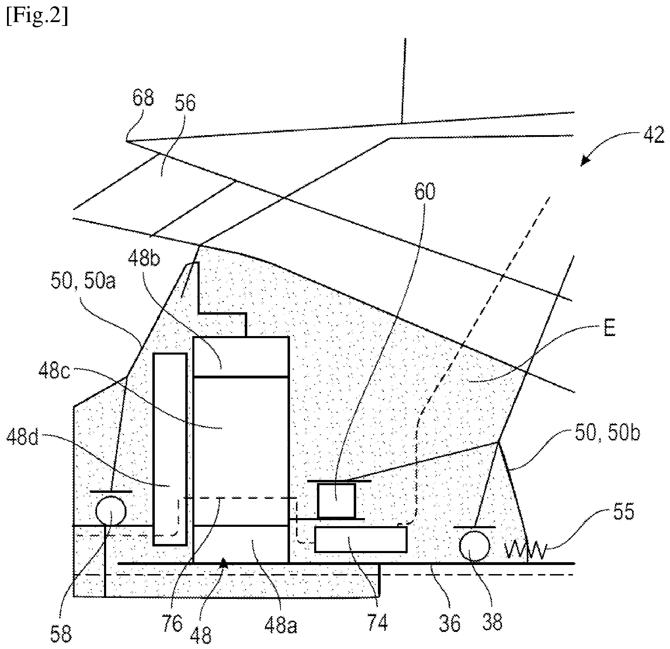

La figure 2 montre le réducteur 48 à plus grande échelle.

Le réducteur 48 comprend un solaire 48a centré sur l'axe A et accouplé à l'arbre BP 36 par exemple par l'intermédiaire de cannelures.

Le réducteur 48 comprend une couronne 48b qui est également centrée sur l'axe A et fixée au carter d'entrée 42.

Le réducteur 48 comprend enfin des satellites 48c qui sont disposés autour de l'axe A et engrenés avec le solaire 48a et la couronne 48b. Ces satellites 48c sont portés par un porte-satellites 48d qui est mobile en rotation autour de l'axe A et est relié à l'arbre de soufflante 46 pour son entraînement en rotation. Le porte-satellites 48d est guidé par des paliers 58, 60 portés par le carter d'entrée 42, ces paliers 58, 60 étant situés respectivement en amont et en aval du réducteur 48.

La soufflante 12 de la figure 1 comprend des pales 12a à calage variable et est associée à un actionneur 62 qui permet de commander de manière centralisée le positionnement des pales 12a autour de leurs axes B, qui sont en général des axes radiaux par rapport à l'axe A de la turbomachine.

Chacune des pales 12a comprend un pied 12b formant un pivot qui est logé dans un logement d'un moyeu 64 en forme d'anneau polygonal, et qui est relié par un système de liaison 66 à un piston de l'actionneur 62.

L'actionneur 62 s'étend le long de l'axe A et son piston est mobile en translation le long de cet axe, par exemple depuis une première position dans laquelle les pales 12a sont en drapeau jusqu'à une seconde position dans laquelle les pales 12a obstruent le passage d'air à travers la soufflante 12. Le flux d'air F1 qui traverse la soufflante 12 est divisé en deux flux annulaires et coaxiaux en aval de la soufflante, par un séparateur annulaire 68 qui s'étend autour de l'aubage 56. Un premier flux d'air appelé flux primaire F2 s'écoule dans une veine primaire et traverse cet aubage 56 et s'écoule dans les compresseurs 14 et 16 pour être comprimé. Cet air comprimé est ensuite mélangé à du carburant puis brûlé dans la chambre de combustion 18. Les gaz de combustion sont ensuite détendus dans les turbines 20, 22 pour entraînés leurs rotors et les arbres BP 36 et HP 26, puis s'écoulent dans la tuyère 24.

Un second flux d'air appelé flux secondaire F3 s'écoule dans une veine secondaire qui est définie intérieurement par un carter annulaire de moteur 70 qui s'étend longitudinalement autour des compresseurs 14, 16, de la chambre de combustion 18 et des turbines 20, 22, et extérieurement par un carter annulaire de nacelle 72 qui s'étend longitudinalement autour de la soufflante 12 et d'une partie du moteur. Ce carter de nacelle 72 est relié au moteur par des aubes directrices de sortie 42a du carter d'entrée 42. Ces aubes directrices 42a sont structurales et sont configurées pour redresser le flux d'air sortant de la soufflante 12.

L'actionneur 62 est hydraulique et fonctionne avec un fluide, de l'huile, qui provient d'un système de lubrification situé en général dans la nacelle ou entre les compresseurs 14, 16 et le carter 70 (c'est-à-dire dans le moteur) et donc dans un repère fixe de la turbomachine. Au contraire, l'actionneur 62 est situé dans un repère tournant.

Comme cela est visible à la figure 2, la turbomachine 10 comprend un dispositif 74 de transfert d'huile depuis le repère fixe du moteur jusqu'au repère tournant dans lequel se situe l'actionneur 62.

Dans l'exemple représenté, le dispositif 74 est situé en aval du réducteur 48 et comprend de préférence plusieurs voies 76 d'alimentation en huile pour alimenter l'actionneur 62 mais aussi pour lubrifier le réducteur 48.

Le trait en pointillé de la figure 2 symbolise une de ces voies sur tout son trajet, du repère fixe à l'actionneur 62 : traversée de la veine primaire jusqu'au dispositif 74, traversée du réducteur 48 (entre ses satellites ou à travers les axes de ces satellites), et cheminement le long du porte-satellites puis de l'arbre de soufflante 46.

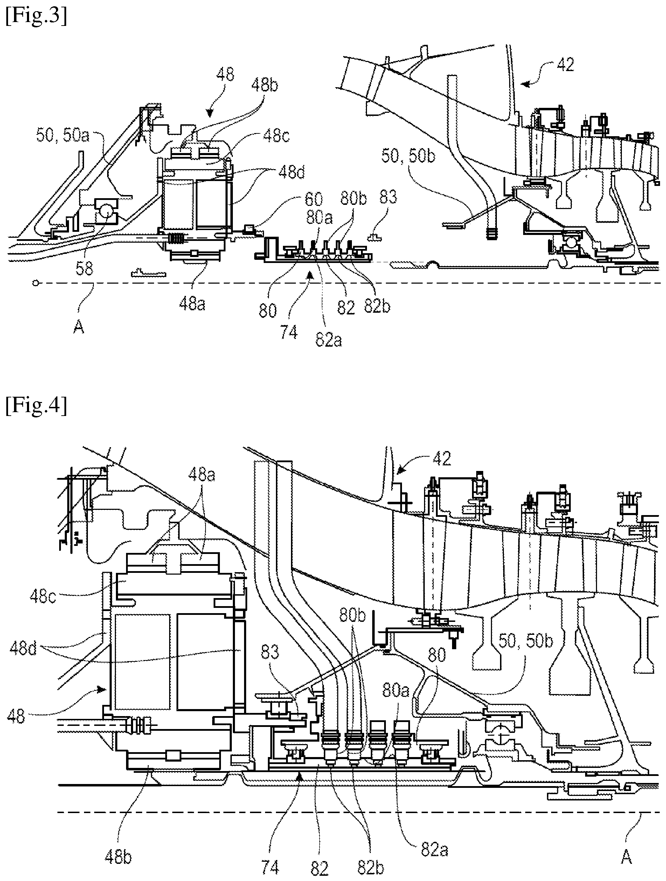

Les figures 3 et 4 illustrent de manière plus détaillé un dispositif 74 de transfert d'huile qui comprend :
- un anneau de stator 80 comportant une surface cylindrique interne 80a et des canalisations internes 80b d'huile qui débouchent chacune sur ladite surface cylindrique interne 80a, et
- un arbre 82 engagé dans l'anneau de stator 80 et mobile en rotation autour de l'axe A à l'intérieur de cet anneau 80, l'arbre 82 comportant une surface cylindrique externe 82a s'étendant à l'intérieur de la surface 80a, et des canalisations internes 82b d'huile qui débouchent chacune sur la surface 82a.

Comme cela est visible à la figure 3 qui illustre une étape de montage du dispositif 74, le dispositif 74 se présente sous la forme d'une cartouche pré-assemblée. L'arbre 82 du dispositif 74 est tout d'abord fixé sur le porte-satellites 48d du réducteur 48 au moyen d'un écrou 83 puis le dispositif sous forme de cartouche qui est solidaire du réducteur 48 est rapproché du reste de la turbomachine pour que son anneau 80 soit fixé au carter 42 par l'intermédiaire de la partie aval 50b du stator 50.

Cette technologie présente de nombreux problèmes décrits plus haut.

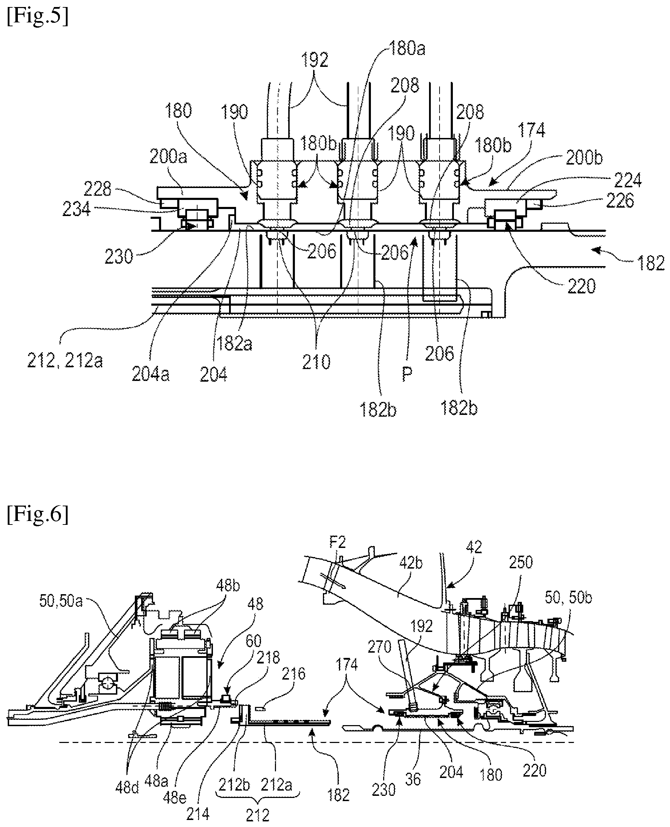

La présente invention permet de remédier à tout ou partie de ces problèmes grâce à un dispositif de transfert d'huile dont un mode de réalisation est illustré aux figures 5 à 11.

Les chiffres de référence utilisés dans ce qui précède pour désigner certains éléments sont repris dans la description qui suit et dans les figures 5 à 11 dans la mesure où ils désignent ces mêmes éléments.

Le dispositif 174 de transfert d'huile des figures 5 à 11 comprend également un anneau de stator 180 et un arbre 182 engagé dans l'anneau de stator 180 et mobile en rotation autour de l'axe A à l'intérieur de cet anneau 180.

Le dispositif 174 comprend en outre un support annulaire 250.

L'anneau 180 comporte une surface cylindrique interne 180a et des canalisations internes 180b d'huile qui débouchent chacune sur la surface 180a. Les canalisations 180b sont disposées les unes derrière les autres le long de l'axe A. Elles sont au nombre de trois dans l'exemple représenté. Bien que les canalisations 180b soient ici représentées dans un même plan axial, elles pourraient être situées respectivement dans des plans axiaux différents. Cela dépend notamment des conduites 192 auxquelles elles sont reliées et des bras 42b à travers lesquels transitent ces conduites. Dans encore une autre variante, les canalisations 180b pourraient comprendre des extrémités radialement externes situées dans un même plan axial et des extrémités réparties angulairement autour de l'axe A et débouchant sur la surface 180a.

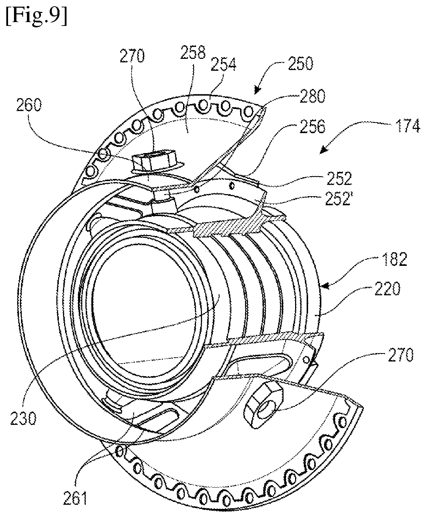

Chacune des canalisations 180b comprend une extrémité radialement interne qui forme le débouché précité et une extrémité radialement externe qui forme un port 190 de raccordement à une conduite d'huile 192 ou à une douille de raccordement, comme cela sera décrit plus en détail dans ce qui suit en relation avec les figures 9 à 11.

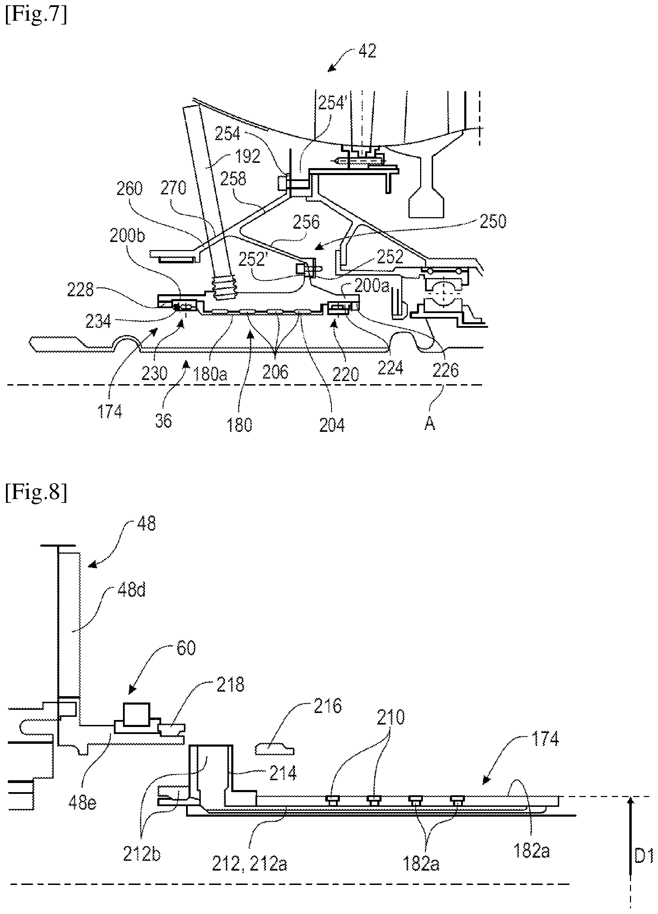

Le port 190 forme une partie femelle et une extrémité de la conduite 192 ou de la douille forme une partie mâle engagée de manière étanche dans le port 190. Parmi les conduites 192 raccordées à l'anneau 180, une est représentée au figures 6 et 7. Ces conduites 192 s'étendent radialement, d'abord à travers des ouvertures 270 du support 250, et d'autre part à travers des bras tubulaires 42b du carter d'entrée 42 qui sont situés dans la veine d'écoulement du flux primaire F2. Ces conduites 192 vont ensuite traverser les aubes directrices 42a qui sont situées dans la veine d'écoulement du flux secondaire F3, pour rejoindre le système de lubrification situé dans la nacelle (voir figure 1). Une alternative consiste à monter le système de lubrification dans le moteur (entre la veine primaire - compresseurs 14 et 16) et le carter 70 de la veine secondaire, de façon à ce que ces conduites 192 ne traversent pas le flux secondaire F3.

L'anneau 180 a une forme générale cylindrique et comprend un rebord cylindrique amont 200a et un rebord cylindrique aval 200b. Ces rebords 200a, 200b ont des diamètres identiques ou similaires.

Une frette 204 est fixée à l'intérieur de l'anneau 180 de façon à recouvrir sa surface 180a. Cette frette 204 s'étend sur une majeure partie de la longueur de l'anneau 180 et comprend un rebord annulaire 204a radialement externe à son extrémité amont qui est en appui axial sur une portée cylindrique de l'anneau 180. Comme son nom l'indique, la frette 204 est montée par frettage dans l'anneau 180. Le frettage associé à l'appui de son rebord 204a assure l'immobilisation de la frette 204 vis-à-vis de l'anneau 180.

La frette 204 comprend une rangée annulaire d'orifices radiaux 206 au droit de chacune des canalisations 180b. Par ailleurs, une gorge annulaire 208 est formée à la périphérie interne de l'anneau 180 et au droit de chacune des canalisations 180b, cette gorge 208 étant fermée à l'intérieur par la frette 204. On comprend donc que chaque canalisation 180b alimente une gorge 208 et que chaque gorge 208 distribue de l'huile aux orifices 206 de la frette 204.

La frette 204 comprend une surface cylindrique externe de frettage qui est au contact de la surface interne 180a de l'anneau 180, et une surface cylindrique interne de centrage destinée à être séparée d'une distance radiale prédéterminée de la surface externe 182a de l'arbre 182 pour définir un palier lisse P.

L'arbre 182 ne porte pas de frette. Ceci permet de réduire le nombre d'interfaces d'empilage de tolérances. Conséquemment, les jeux sont fortement réduits entre rotor et stator par réduction du nombre d'interfaces. L'arbre 182 comporte une surface cylindrique externe 182a s'étendant à l'intérieur de la surface 180a et des canalisations internes 182b d'huile qui débouchent chacune sur la surface 182a. Les canalisations 182b ont toutes une orientation radiale et sont disposées les unes derrière les autres le long de l'axe A. Elles sont au nombre de trois dans l'exemple représenté.

Une gorge annulaire 210 est formée à la périphérie externe de l'arbre 182 et au droit de chacune des canalisations 182b.

Chacune des canalisations 182b est reliée à une conduite 212 qui peut être intégrée à l'arbre 182. L'une de ces conduites 212, visible en section dans les figures, comprend une portion annulaire 212a qui s'étend autour de l'axe A et le long d'une majeure partie de la longueur de l'arbre 182. L'extrémité aval de cette portion 212a est reliée à la canalisation 182b la plus aval de l'arbre, et son extrémité amont est reliée à une portion radiale 212b qui est formée dans une nervure annulaire amont 214 de l'arbre.

Cette nervure 214 sert à la fixation de l'arbre 182 du dispositif 174. Dans l'exemple représenté, l'arbre 182 du dispositif 174 est fixé au porte-satellites 48d du réducteur 48. Le porte-satellites 48d comprend un rebord cylindrique aval 48e sur la périphérique externe duquel est monté le palier 60, et à la périphérie interne duquel est engagé la nervure 214. Cette nervure 214 prend appui axialement vers l'amont sur une portée cylindrique du rebord 48e et est maintenue en appui axial contre cette portée par un écrou 216 vissé depuis l'aval sur la périphérie interne du rebord 48e.

Le palier 60 est ici à roulement et comprend des rouleaux qui sont disposés entre deux bagues, respectivement interne et externe, la bague interne étant serrée axialement contre une autre portée cylindrique de la périphérie externe du rebord 48e par un écrou 218 vissé depuis l'aval sur cette périphérie.

Un premier palier à roulement 220 est monté entre le rebord 200b de l'anneau 180 et l'extrémité aval de l'arbre 182.

Le palier 220 est ici à roulement et comprend des rouleaux qui sont disposés entre deux chemins de roulement, respectivement interne et externe.

Le chemin de roulement interne du palier 220 est intégré à l'arbre 182, c'est à dire qu'il n'y a pas de bague interne rapportée sur l'arbre 182 pour le palier 220.

Le chemin de roulement externe du palier 220 est formé par une bague externe 224 montée à l'intérieur du rebord 200b. Cette bague 224 est en appui axial sur une portée cylindrique de la périphérie interne du rebord 200b, situé à l'amont. A l'aval, la bague 224 est retenue axialement par un écrou 226 vissé à la périphérie interne du rebord 200b ou une frette engagée dans ce rebord.

Le chemin de roulement interne du palier 230 est intégré à l'arbre 182, c'est à dire qu'il n'y a pas non plus de bague interne rapportée sur l'arbre 182 pour le palier 230.

Le chemin de roulement externe du palier 230 est formé par une bague externe 234 montée à l'intérieur du rebord 200a. Cette bague 234 est en appui axial sur une portée cylindrique de la périphérie interne du rebord 200a, situé à l'aval. A l'amont, la bague 234 est retenue axialement par un écrou 228 vissé à la périphérie interne du rebord 200a ou une frette engagée dans ce rebord.

Avantageusement, comme cela est visible à la figure 5, la surface externe 182a de l'arbre 182 et les chemins internes de roulement des paliers 220, 230 (intégrés à l'arbre 182) ont un même diamètre D1 et s'étendent sans discontinuité dans le prolongement les uns des autres. On comprend ainsi que l'arbre 182 peut être monté à l'intérieur de l'anneau 180 par translation axiale, l'anneau 180 pouvant être pré-équipé avec la frette 204 et les bagues 224, 234 et les rouleaux des paliers 220, 230 juste avant cette translation.

Le palier lisse P est alimenté en huile directement par les canalisations 180b de l'anneau 180. On comprend que l'épaisseur radiale de l'espace entre la frette 204 et la surface 182b est calculée pour que des fuites maitrisées aient lieu aux interfaces entre les canalisations 180b, 182b, de façon à alimenter le palier lisse P. L'huile se répand alors sur toute l'étendue axiale du palier lisse P et jusqu'aux paliers à roulement 220, 230 en vue de leur lubrification. On entend par « voie » du dispositif 174, l'association d'une canalisation 180b de l'anneau 180 avec une canalisation 182b de l'arbre 182. Dans l'exemple représenté, le dispositif 174 comprend trois voies. De manière préférée, une des voies est utilisée pour l'alimentation en huile de l'actionneur 62, et une autre des voies est utilisée pour le retour d'huile de l'actionneur 62. Enfin, la dernière voie peut être utilisée pour la protection hydraulique de l'actionneur ou pour alimenter en huile le réducteur 48.

Le dispositif 174 est par exemple configuré pour alimenter l'actionneur 62 à une pression d'huile comprise entre 2 et 200 bars, et de préférence entre 5 et 130 bars.

Le support annulaire 250 s'étend au moins en partie autour de l'anneau 180 et comprend au moins un premier organe de fixation à l'anneau 180 et au moins un second organe de fixation au carter 42. Dans l'exemple représenté, ces organes sont formés par des brides annulaires 252, 254 qui sont destinées à être fixées à des brides annulaires correspondantes par des moyens du type vis-écrou.

Le support 250 est configuré pour se déformer élastiquement de façon à autoriser des déplacements de l'anneau 180 en direction radiale.

Dans l'exemple représenté, le support 250 comprend des parois tronconiques 256, 258, 260 dont au moins une est ajourée, c'est-à-dire comprend des ajours 261 traversants, de façon à réduire sa rigidité en direction radiale (figures 9 à 11). Cette rigidité peut également être réduite en réduisant l'épaisseur de cette paroi.

Le support 250 comprend une première paroi tronconique 256 qui s'étend radialement vers l'intérieur de l'amont vers l'aval et qui est reliée à sa périphérie interne à la bride 252 de fixation à une bride 252' de l'anneau 180. Dans l'exemple représenté, la bride 252' de l'anneau s'étend dans un plan perpendiculaire à l'axe A, qui passe entre les paliers 220, 230 du dispositif 174.

Le support 250 comprend une deuxième paroi tronconique 258 qui s'étend radialement vers l'extérieur de l'amont vers l'aval depuis la périphérie externe de la première paroi 256. Cette deuxième paroi 258 comprend à sa périphérie externe la bride 254 de fixation à une bride 254' du carter 42 (figure 7). La bride 254' s'étend dans un plan perpendiculaire à l'axe A, qui est proche du plan passant par la bride 252'.

On comprend ainsi que les parois 256, 258 forment en section axiale un V dont la pointe est orientée vers l'amont.

Le support 250 comprend une troisième paroi tronconique 260 qui s'étend radialement vers l'extérieur de l'amont vers l'aval et dont la périphérie externe est reliée à la zone de jonction des parois 256, 258. La périphérie interne de cette paroi 260 est donc située du côté amont et porte la bague externe du palier 60 précité dans l'exemple représenté.

Comme évoqué dans ce qui précède, le support 250 comprend des ouvertures 270 de passage des conduites 192 d'alimentation en huile des canalisations 180b de l'anneau 180.

Dans l'exemple représenté, ces ouvertures 270 sont formées dans la paroi tronconique 260 et sont mieux visibles aux figures 9 à 11. Avantageusement, la paroi 260 comprend autant d'ouvertures 270 que de canalisations internes 180b de l'anneau 180, à savoir trois par exemple. Ces ouvertures 270 sont réparties autour de l'axe A et sont alignées radialement avec un des ports 190 précités de l'anneau.

Des douilles de raccordement 280 fluidique étanche peuvent s'étendre dans l'espace annulaire situé entre l'anneau 180 et le support 250 et comprendre chacune une extrémité radialement externe engagée dans une des ouvertures 270, et une extrémité radialement interne engagée dans un des ports 190. Les conduites 192 précitées comprendraient alors des extrémités radialement internes engagées à étanchéité dans les ouvertures 270 pour être raccordées par les douilles 280 aux canalisations 180b de l'anneau 180. Les figures 9 à 11 permettent de constater que les douilles 280 sont droites et que ce sont les canalisations 180b de l'anneau qui sont conformées et en particulier plus ou moins coudées, pour raccorder ces douilles 280 aux gorges 208 et aux orifices 206.

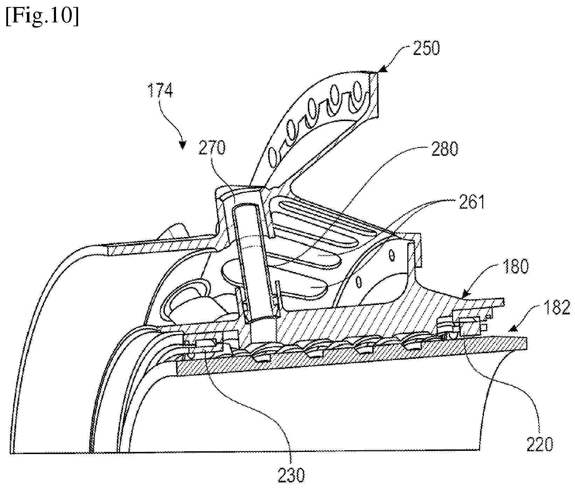

La canalisation 180b de l'anneau 180 la plus amont par exemple, visible en coupe à la figure 10, a une orientation droite ou rectiligne et est sensiblement alignée avec la douille 280 et l'ouverture 270 correspondantes.

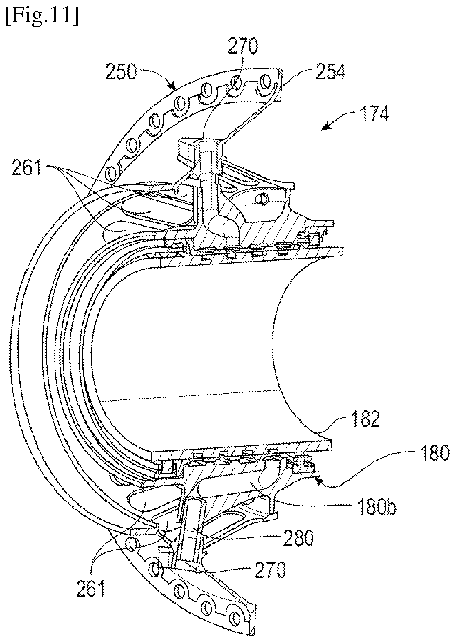

La canalisation 180b de l'anneau 180 la plus aval par exemple, visible dans la partie basse de la vue en coupe à la figure 11, présente deux coudes reliées par une partie allongée qui s'étend sensiblement parallèlement à l'axe A.

Enfin, la canalisation 180b intermédiaire de l'anneau, visible dans la partie haute de la vue en coupe à la figure 11, présente une forme générale en S. On constate que les ouvertures 270 sont situées sensiblement dans un même plan perpendiculaire à l'axe A.

La figure 6 montre un procédé d'assemblage du dispositif 174. Une première étape consiste à fixer l'anneau 180 au support 250 par fixation des brides 252, 252' entre elles, puis à raccorder les conduites 192 aux canalisations 180b ou aux ouvertures 270 du support 250, comme évoqué dans ce qui précède.

Une autre étape consiste à engager l'arbre 182 dans le porte-satellites 48d du réducteur 48 et à le fixer à ce dernier par serrage de l'écrou 216.

Ensuite, l'arbre 182 est engagé dans l'anneau 180, par translation axiale de l'ensemble formé par le réducteur 48 et l'arbre 182, dans l'anneau 180.

La figure 6 permet de voir que l'arbre 182 est alors intercalé entre l'arbre BP 36, dont l'extrémité amont est accouplée au solaire 48a du réducteur, et l'anneau 180, et que la bague externe portée par le support 250 recouvre les rouleaux du palier 60 situés avec la bague interne de ce palier sur le rebord 48e du porte-satellites 48d. La partie amont 50a du stator est alors fixée au carter 42, ce qui permet de positionner précisément l'arbre 182 à l'intérieur de l'anneau 180 en direction axiale.

## Revendications

1. Module de soufflante pour une turbomachine d'aéronef, ce module comportant une soufflante (12) qui comporte un arbre de soufflante (46) et des aubes de soufflante (12a) à calage variable, et un dispositif (174) de transfert d'huile configuré pour assurer un transfert d'huile entre un stator et un actionneur (62) qui est solidaire en rotation de l'arbre de soufflante (46) et qui est configuré pour contrôler le calage des aubes de soufflante, ce dispositif comportant :
- un anneau de stator (180) comportant une surface cylindrique interne (180a) et des canalisations internes (180b) d'huile qui débouchent chacune sur ladite surface cylindrique interne (180a),
- un arbre (182) engagé dans ledit anneau (180) et comportant une surface cylindrique externe (182a) s'étendant à l'intérieur de ladite surface cylindrique interne (180a), l'arbre comportant des canalisations internes (182b) d'huile qui débouchent chacune sur ladite surface cylindrique externe (182a), l'arbre comportant en outre un organe de fixation configuré pour être fixé à un rotor de la turbomachine, et
- un support annulaire (250) qui s'étend au moins en partie autour de l'anneau (180) et qui comprend au moins un premier organe de fixation à l'anneau (180) et au moins un second organe de fixation configuré pour être fixé à un stator de la turbomachine,
**caractérisé en ce qu'**il comprend en outre :
- un palier lisse (P) situé entre lesdites surfaces cylindriques interne (180a) et externe (182a), et
- des paliers à rouleaux (220, 230) montés entre l'anneau (180) et l'arbre (182), de part et d'autre du palier lisse (P), chacun de ces paliers (220, 230) comportant des bagues externes (224, 234) et des rouleaux portés par l'anneau (180), l'anneau étant configuré pour être monté sur l'arbre (182) par engagement de l'arbre (182) dans l'anneau (180) lorsque celui-ci est pré-équipé des bagues externes (224, 234) et des rouleaux des paliers (220, 230),
et **en ce que** ledit support (250) est configuré pour se déformer élastiquement de façon à autoriser des déplacements de l'anneau (180) en direction radiale.

2. Module selon la revendication 1, dans lequel le support (250) comprend au moins une première paroi tronconique (256) ajourée.

3. Module selon la revendication 2, dans lequel la première paroi tronconique (256) a sa périphérie interne qui est reliée ou qui porte ledit premier organe, cette première paroi s'étendent par exemple radialement vers l'intérieur de l'amont vers l'aval.

4. Module selon la revendication 3, dans lequel le support (250) comprend une seconde paroi tronconique (258) dont la périphérie interne est reliée à la périphérie externe de la première paroi (256) et dont la périphérie externe est reliée ou porte ledit second organe, cette seconde paroi s'étendant par exemple radialement vers l'extérieur de l'amont vers l'aval.

5. Module selon la revendication 4, dans lequel la première paroi (256) a sa périphérie externe qui est reliée à la périphérie externe d'une troisième paroi tronconique (260) dont la périphérie interne est reliée ou porte une bague externe d'un autre palier à rouleaux (60), cette troisième paroi (260) s'étendant par exemple radialement vers l'extérieur de l'amont vers l'aval.

6. Module selon l'une des revendications précédentes, dans lequel le support (250) comprend des ouvertures (270) de passage ou de raccordement de conduites (192) d'alimentation en huile des canalisations (180b) de l'anneau (180).

7. Module selon l'une des revendications précédentes, dans lequel une frette (204) est montée à l'intérieur de l'anneau (180) et définit ledit palier lisse (P) avec ladite surface externe (182a) de l'arbre (182).

8. Module selon l'une des revendications précédentes, dans lequel l'arbre (182) comprend des chemins internes intégrés de roulement desdits rouleaux.

9. Module selon l'ensemble des revendications 7 et 8, dans lequel les chemins internes sont formés par une même surface cylindrique qui s'étend en continu à l'intérieur de la frette (204).

10. Module selon l'une des revendications précédentes, dans laquelle la soufflante (12) est entrainée en rotation par un réducteur (48), ledit dispositif étant monté en aval du réducteur (48) et étant configuré pour alimenter en huile le réducteur ainsi que l'actionneur (62) par des conduites traversant axialement le réducteur, et en particulier un porte-satellites (48d) du réducteur.

11. Module selon la revendication précédente, dans lequel l'arbre (182) du dispositif est fixé au porte-satellites (48d) du réducteur (48).

12. Module selon la revendication précédente, dans lequel un palier à roulement (60), et en particulier à rouleaux, est monté entre le porte-satellites (48d) et ledit support (250).

13. Procédé d'assemblage d'un module selon la revendication 11 ou 12, comprenant les étapes de :
- fixation de l'arbre (182) au porte-satellites (48d) du réducteur, et fixation de l'anneau (180) au stator par l'intermédiaire dudit support (250), puis
- engagement de l'arbre (182) dans l'anneau (180).

## Patentansprüche

1. Gebläsemodul für ein Turbotriebwerk eines Luftfahrzeugs, wobei dieses Modul ein Gebläse (12) umfasst, das eine Gebläsewelle (46) und Gebläseschaufeln (12a) mit variabler Feststellposition und eine Vorrichtung (174) zum Transferieren von Öl umfasst, die konfiguriert ist, um einen Transfer von Öl zwischen einem Stator und einem Aktuator (62) sicherzustellen, der mit der Gebläsewelle (46) drehfest ist und der konfiguriert ist, um die Feststellposition der Gebläseschaufeln zu steuern, wobei diese Vorrichtung umfasst:
- einen Statorring (180), der eine innere zylindrische Oberfläche (180a) und innere Ölrohre (180b) umfasst, die jeweils auf der inneren zylindrischen Oberfläche (180a) münden,
- eine Welle (182), die in dem Ring (180) in Eingriff steht und eine äußere zylindrische Oberfläche (182a) umfasst, die sich im Inneren der inneren zylindrischen Oberfläche (180a) erstreckt, wobei die Welle innere Ölrohre (182b) umfasst, die jeweils auf der äußeren zylindrischen Oberfläche (182a) münden, wobei die Welle weiter ein Befestigungsorgan umfasst, das konfiguriert ist, um an einem Rotor des Turbotriebwerks befestigt zu werden, und
- eine ringförmige Stütze (250), die sich mindestens teilweise um den Ring (180) erstreckt und die mindestens ein erstes Befestigungsorgan an den Ring (180) und mindestens ein zweites Befestigungsorgan umfasst, das konfiguriert ist, um an einem Stator des Turbotriebwerks befestigt zu werden, **dadurch gekennzeichnet, dass** es weiter umfasst:
- ein Gleitlager (P), das sich zwischen der inneren (180a) und äußeren (182a) zylindrischen Oberfläche befindet, und
- Rollenlager (220, 230), die zwischen dem Ring (180) und der Welle (182), beiderseits des Gleitlagers (P) angebracht sind, wobei jedes dieser Lager (220, 230) äußere Ringe (224, 234) und Rollen, die von dem Ring (180) getragen werden, umfasst, wobei der Ring konfiguriert ist, um an der Welle (182) durch Eingriff der Welle (182) in den Ring (180) angebracht zu werden, wenn dieser im Voraus mit äußeren Ringen (224, 234) und Rollen der Lager (220, 230) ausgerüstet ist,
und dadurch, dass die Stütze (250) konfiguriert ist, um sich derart elastisch zu verformen, dass Verlagerungen des Rings (180) in radialer Richtung zugelassen sind.

2. Modul nach Anspruch 1, wobei die Stütze (250) mindestens eine durchbrochene erste kegelstumpfförmige Wand (256) umfasst.

3. Modul nach Anspruch 2, wobei die erste kegelstumpfförmige Wand (256) ihren Innenumfang aufweist, der mit dem ersten Organ verbunden ist oder dieses trägt, wobei diese erste Wand sich beispielsweise von der stromaufwärtigen Richtung zur stromabwärtigen Richtung radial nach innen erstreckt.

4. Modul nach Anspruch 3, wobei die Stütze (250) eine zweite kegelstumpfförmige Wand (258) umfasst, deren Innenumfang mit dem Außenumfang der ersten Wand (256) verbunden ist und deren Außenumfang mit dem zweiten Organ verbunden ist oder dieses trägt, wobei diese zweite Wand sich beispielsweise von der stromaufwärtigen Richtung zur stromabwärtigen Richtung radial nach außen erstreckt.

5. Modul nach Anspruch 4, wobei die erste Wand (256) ihren Außenumfang aufweist, der mit dem Außenumfang einer dritten kegelstumpfförmigen Wand (260) verbunden ist, deren Innenumfang mit einem äußeren Ring eines anderen Rollenlagers (60) verbunden ist oder diesen trägt, wobei diese dritte Wand sich beispielsweise von der stromaufwärtigen Richtung zur stromabwärtigen Richtung radial nach außen erstreckt.

6. Modul nach einem der vorstehenden Ansprüche, wobei die Stütze (250) Durchgangs- oder Leitungsanschlussöffnungen (270) für die Versorgung der Rohre (180b) des Rings (180) mit Öl umfasst.

7. Modul nach einem der vorstehenden Ansprüche, wobei ein Schrumpfring (204) im Inneren des Rings (180) angebracht ist und das Gleitlager (P) mit der äußeren Oberfläche (182a) der Welle (182) definiert.

8. Modul nach einem der vorstehenden Ansprüche, wobei die Welle (182) eingebaute innere Wälzpfade der Rollen umfasst.

9. Modul nach der Gesamtheit der Ansprüche 7 und 8, wobei die inneren Pfade durch eine gleiche zylindrische Oberfläche gebildet werden, die sich durchgehend im Inneren des Schrumpfrings (204) erstreckt.

10. Modul nach einem der vorstehenden Ansprüche, wobei das Gebläse (12) durch ein Untersetzungsgetriebe (48) in Drehung versetzt wird, wobei die Vorrichtung stromabwärts des Untersetzungsgetriebes (48) angebracht ist und konfiguriert ist, um das Untersetzungsgetriebe sowie den Aktuator (62) über Leitungen, die das Untersetzungsgetriebe axial durchqueren, und insbesondere einen Planetenträger (48d) des Untersetzungsgetriebes, mit Öl zu versorgen.

11. Modul nach einem der vorstehenden Ansprüche, wobei die Welle (182) der Vorrichtung am Planetenträger (48d) des Untersetzungsgetriebes (48) befestigt ist.

12. Modul nach dem vorstehenden Anspruch, wobei ein Wälzlager (60), und insbesondere ein Rollenlager, zwischen dem Planetenträger (48d) und der Stütze (250) angebracht ist.

13. Verfahren zum Zusammenbau eines Moduls nach Anspruch 11 oder 12, umfassend die folgenden Schritte:
- Befestigen der Welle (182) am Planetenträger (48d) des Untersetzungsgetriebes, und Befestigen des Rings (180) am Stator mithilfe der Stütze (250), dann
- Eingreifen der Welle (182) in den Ring (180).

## Claims

1. A fan module for an aircraft turbine engine, this module comprising a fan (12) which comprises a fan shaft (46) and variable pitch fan vanes (12a), and an oil transfer device (174) configured to ensure a transfer of oil between a stator and an actuator (62) that is secured in rotation to the fan shaft (46) and that is configured to control the pitch of the fan vanes, this device comprising:
- a stator annulus (180) comprising an internal cylindrical surface (180a) and internal oil pipes (180b) each opening onto said internal cylindrical surface (180a),
- a shaft (182) engaged in said annulus (180) and comprising an external cylindrical surface (182a) extending inside said internal cylindrical surface (180a), the shaft comprising internal oil pipes (182b) each opening onto said external cylindrical surface (182a), the shaft further comprising an attachment member configured to be attached to a rotor of the turbine engine, and
- an annular support (250) which extends at least partly around the annulus (180) and which comprises at least one first attachment member for attaching to the annulus (180) and at least one second attachment member configured to be attached to a stator of the turbine engine,
**characterised in that** it further comprises:
- a plain bearing (P) located between said internal (180a) and external (182a) cylindrical surfaces, and
- roller bearings (220, 230) mounted between the annulus (180) and the shaft (182), on either side of the plain bearing (P), each of these bearings (220, 230) comprising external rings (224, 234) and rollers carried by the annulus (180), the annulus being configured to be mounted on the shaft (182) by engagement of the shaft (182) in the annulus (180) when the latter is pre-equipped with the external rings (224, 234) and with the rollers of the bearings (220, 230),
and **in that** said support (250) is configured to deform elastically so as to allow the annulus (180) to displace in the radial direction.

2. The module according to claim 1, wherein the support (250) comprises at least one first perforated frustoconical wall (256).

3. The module according to claim 2, wherein the first frustoconical wall (256) has its internal periphery connected to or carrying said first member, this first wall extending for example radially inwardly from upstream to downstream.

4. The module according to claim 3, wherein the support (250) comprises a second frustoconical wall (258), the internal periphery of which is connected to the external periphery of the first wall (256) and the external periphery of which is connected to or carries said second member, this second wall extending, for example, radially outwards from upstream to downstream.

5. The module according to claim 4, wherein the first wall (256) has its external periphery connected to the external periphery of a third frustoconical wall (260) whose internal periphery is connected to or carries an external ring of another roller bearing (60), this third wall (260) extending for example radially outwards from upstream to downstream.

6. The module according to one of the preceding claims, wherein the support (250) comprises openings (270) for the passage or the connection of conduits (192) supplying oil to the pipes (180b) of the annulus (180).

7. The module according to one of the preceding claims, wherein a shrink ring (204) is mounted inside the annulus (180) and defines said plain bearing (P) with said external surface (182a) of the shaft (182).

8. The module according to one of the preceding claims, wherein the shaft (182) comprises integrated internal raceways for rolling said rollers.

9. The module according to all of claims 7 and 8, wherein the internal raceways are formed by a single cylindrical surface which extends continuously inside the shrink ring (204).

10. The module according to one of the preceding claims, wherein the fan (12) is driven in rotation by a reducer (48), said device being mounted downstream of the reducer (48) and being configured to supply oil to the reducer and to the actuator (62) via conduits passing axially through the reducer, and in particular a planet carrier (48d) of the reducer.

11. The module according to the preceding claim, wherein the shaft (182) of the device is attached to the planet carrier (48d) of the reducer (48).

12. The module according to the preceding claim, wherein a rolling bearing (60), in particular a roller bearing, is mounted between the planet carrier (48d) and said support (250).

13. A method for assembling a module according to claim 11 or 12, comprising the steps of:
- attaching the shaft (182) to the planet carrier (48d) of the reducer, and attaching the annulus (180) to the stator by means of said support (250), then
- engaging the shaft (182) in the annulus (180).
